# EUROPEAN PATENT APPLICATION

(11) **EP 3 300 276 A1**
(43) Date of publication of application: **28.03.2018**
(21) Application number: 16820772.8
(22) Date of filing: 28.06.2016
(51) Int. Cl.: H04L 1/00

(54) **METHOD, DEVICE AND SYSTEM FOR SENDING AND RECEIVING CODE BLOCK DATA STREAM**

(30) Priority: 06.07.2015 CN 201510393443
(71) Applicant: Huawei Technologies Co., Ltd., Longgang District Shenzhen, Guangdong 518129 (CN)
(72) Inventor: ZHONG, Qiwen, Shenzhen Guangdong 518129 (CN); WU, Qiuyou, Shenzhen Guangdong 518129 (CN)
(74) Representative: Goddar, Heinz J.
(86) International application number: PCT/CN2016/087496
(87) International publication number: WO 2017/005121

(57) **Abstract**

Embodiments of the present invention disclose a method for sending a code block data stream, including: adding m first data frames carrying the code block data stream to n physical layer data frames on an Ethernet physical interface, identifying a location of the first code block of each first data frame in the m first data frames by using an alignment marker of a physical layer data frame in the n physical layer data frames, and sending the n physical layer data frames that carry the m first data frames of the code block data stream, where m and n are integers greater than or equal to 1. According to the foregoing technical solution, there is no need to perform framing search in the first data frame, so as to improve efficiency in performing framing in the first data frame, reduce an overhead bit of the first data frame, and reduce system design complexity.

## Description

### TECHNICAL FIELD

The present invention relates to the field of communications, and in particular, to a method, device, and system for sending and receiving a code block data stream.

### BACKGROUND

As a network rate increases, when the network rate exceeds a bearer capability of a physical device, a high-rate interface can be implemented by means of multilane parallel transmission. For example, multilane parallel transmission is selectively used in both 40GE (40 Gigabit Ethernet, 40 Gigabit Ethernet) and 100GE (100 Gigabit Ethernet, 100 Gigabit Ethernet) Ethernet. 100GE Ethernet is used for description. A 100GE Ethernet interface is compatible with an electrical interface and an optical interface with multiple parallel lanes, such as 10 lanes, five lanes, four lanes, or two lanes. Herein, the 10 lanes, five lanes, four lanes, and two lanes are physical lanes. A 100GE Ethernet interface is usually divided into 20 virtual lanes, and in this way, different combinations of the foregoing 10 lanes, five lanes, four lanes, and two lanes may be compatible with the 20 virtual lanes. After performing 64B/66B encoding on data, a system sending side of 100GE Ethernet distributes the data to the 20 virtual lanes at a granularity of a 64B/66B code block. A 64B/66B code block is still used as a granularity in data streams on the 20 virtual lanes. A system receiving side performs 64B/66B code block synchronization on the 20 virtual lanes. Usually, 20 virtual lanes, each of which includes 16383 64B/66B code blocks, may be considered as one physical layer data frame with a specific data structure of 20 rows × 16383 columns. One AM (Alignment Marker, alignment marker) is inserted before a start location of each row of a physical layer data frame, and AMs identify serial numbers (such as AM0 ... AM19) of 20 virtual lanes respectively corresponding to 20 rows of the data frame. Therefore, the receiving side may determine a start location of a physical layer data frame and a sequence of rows of the physical layer data frame by searching for and identifying AM0 to AM19.

A 64B/66B code block includes a 2-bit SH (Synchronize Header, synchronization header). When SH = 01, it indicates that an overhead code block in which the SH is located is a data code block; or when SH = 10, it indicates that an overhead code block in which the SH is located is a control code block. In a control code block, without counting a synchronization header SH, the first byte is used to identify a code block type, and other 56 bits are used to encode a control character and a data character.

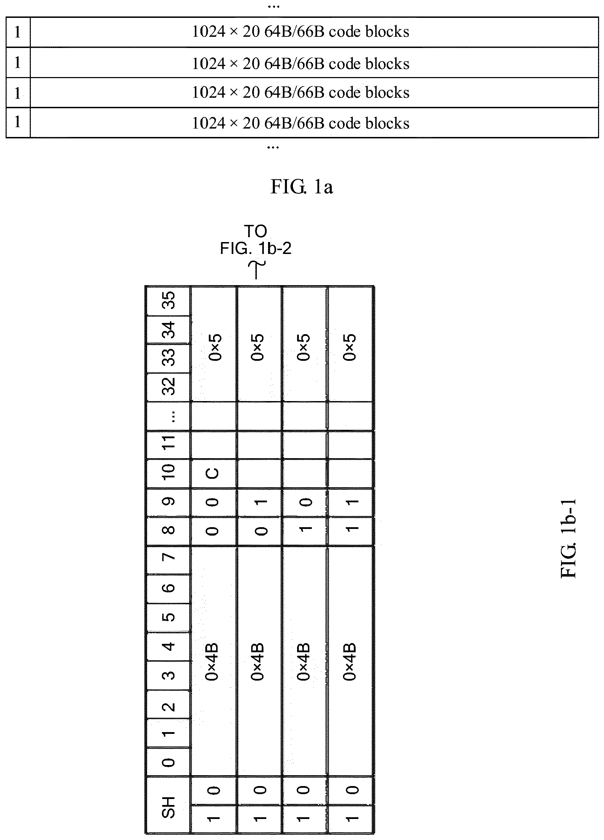

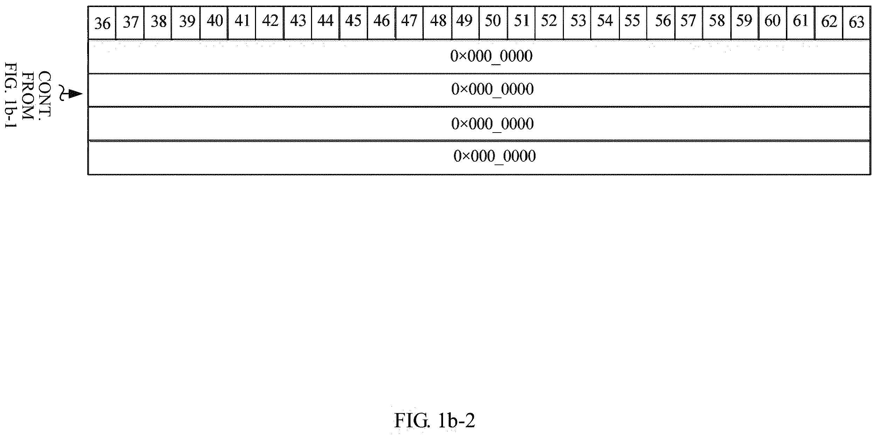

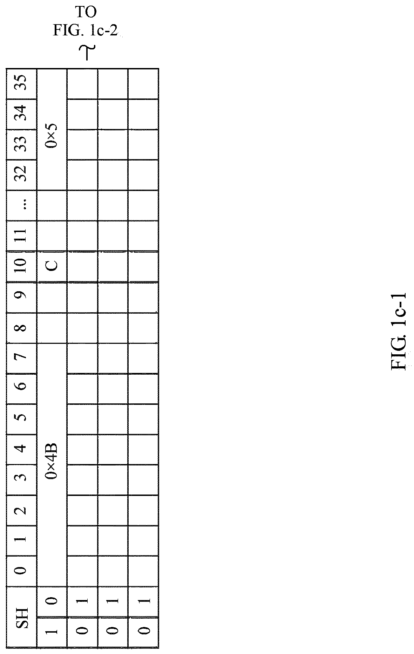

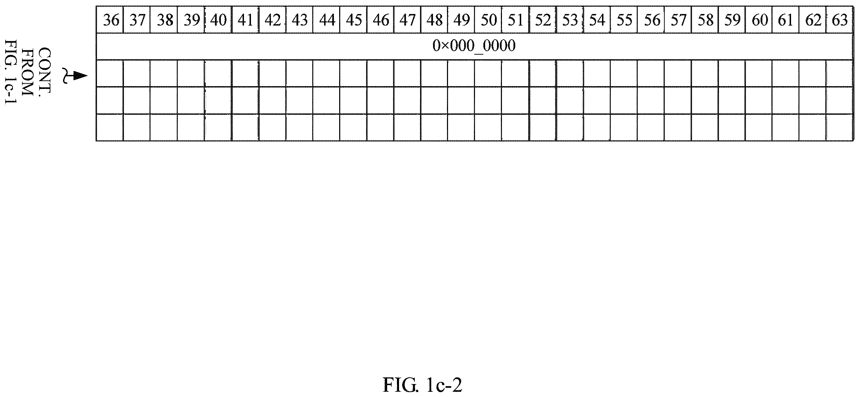

When a code block data stream with a periodic frame structure, such as a flexible Ethernet data frame, is transmitted on a 100GE Ethernet physical interface, the flexible Ethernet data frame is carried in a physical layer data frame on the 100GE Ethernet physical interface. The physical layer data frame is equivalent to a transmission path, and the flexible Ethernet data frame is equivalent to data on the transmission path. The flexible Ethernet data frame has a periodic frame structure. For example, in a flexible Ethernet data frame transmitted on a 100GE Ethernet physical interface, there are 1024 groups of information code blocks following an overhead code block of the flexible Ethernet data frame. Each group of information code blocks includes 20 64B/66B code blocks that may respectively correspond to 20 time-division timeslots. That is, the flexible Ethernet data frame has a subframe structure with a period of 20*1024 + 1 = 20481 64B/66B code blocks. Consecutive several periods of subframe structures, such as four periods of subframe structures shown in FIG. 1a, form one basic frame. Consecutive several periods of basic frame structures, such as 40 periods of basic frame structures, form one super frame. In a subframe of a flexible Ethernet data frame, an overhead code block is the first 64B/66B code block of the entire flexible Ethernet data subframe. As shown in FIG. 1b-1, FIG. 1b-2, FIG. 1c-1, and FIG. 1c-2, an overhead code block of a flexible Ethernet data frame includes at least one control code block that has a specific bit pattern for distinguishing the overhead code block from another 64B/66B code block. As shown in FIG. 1b-1 and FIG. 1b-2, a start location of a basic frame may be determined by using the control code block of the specific bit pattern. Specifically, a type of the control code block is 0x4B, and the 32^{nd} to 35^{th} bits of the control code block are 0x5. 0x5 on the additional 32^{nd} to 35^{th} bits enables the control code block to be a complete control code block that has a specific bit pattern for distinguishing the overhead code block from another 64B/66B code block. Therefore, the control code block further indicates that a type of a data frame and/or a code block stream in which the code block is located is a flexible Ethernet data frame and/or a code block stream, and the flexible Ethernet data frame and/or the code block stream are/is distinguished from a data frame and/or a code block stream on a conventional Ethernet and fiber channel. As shown in FIG. 1c-1 and FIG. 1c-2, if one basic frame includes several control code blocks, multiframe indication information needs to be used to indicate serial numbers of subframes in the basic frame, so as to determine a start location of the basic frame, such as the eighth and the ninth bits. The eighth and the ninth bits are set to 00, 01, 10, or 11, to respectively indicate that subframes in which the eighth and the ninth bits are located are the first, the second, the third, and the fourth subframes of a basic frame. Therefore, a start location of the basic frame is determined. A start location of a super frame may be indicated by using one specified bit included in each basic frame, such as the tenth bit. The start location of the super frame is determined by setting bit C of the first basic frame in the super frame to 0 and bit C of another basic frame to 1, and the like.

In the prior art, when a code block data stream with a periodic frame structure is transmitted on an Ethernet physical interface, for example, a 100GE physical interface is used to transmit a flexible Ethernet data frame, first, there is a need to perform framing search in a physical layer data frame on the Ethernet physical interface, that is, searching for an AM, according to an existing frame structure definition of the 100GE Ethernet physical interface. Further, there is also a need to perform framing in the flexible Ethernet data frame, that is, determine a start location of the flexible Ethernet data frame. There are two levels of framing search, and this increases system design complexity and lowers framing efficiency.

### SUMMARY

In view of this, embodiments of the present invention provide a method, device, and system for sending and receiving a code block data stream, so as to resolve a prior-art problem that when a code block data stream with a periodic frame structure is transmitted on an Ethernet physical interface, there are two levels of framing search, high system design complexity, and low framing search efficiency.

According to a first aspect, an embodiment of the present invention provides a method for sending a code block data stream, including: adding m first data frames carrying the code block data stream to n physical layer data frames on an Ethernet physical interface, identifying a location of the first code block of each first data frame in the m first data frames by using one alignment marker of one physical layer data frame in the n physical layer data frames, and sending the n physical layer data frames that carry the m first data frames of the code block data stream, where m and n are integers greater than or equal to 1.

With reference to an implementation of the first aspect, in a first possible implementation of the first aspect, the location of the first code block of each first data frame in the m first data frames one-to-one corresponds to one alignment marker of one physical layer data frame in the n physical layer data frames.

With reference to the first aspect or the first possible implementation of the first aspect, in a second possible implementation of the first aspect, locations of the first code blocks of at least two first data frames in the m first data frames correspond to one alignment marker of one physical layer data frame in the n physical layer data frames.

With reference to any one of the first aspect, or the first and the second possible implementations of the first aspect, in a third possible implementation of the first aspect, the code block in the code block data stream is a 64B/66B code block.

According to a second aspect, an embodiment of the present invention provides a method for receiving a code block data stream, including: obtaining n physical layer data frames that are on an Ethernet physical interface and that carry m first data frames of the code block data stream, determining a location of the first code block of each first data frame in the m first data frames according to one alignment marker of one physical layer data frame in the n physical layer data frames, and performing data restoration on the code block data stream by using the first code of each first data frame in the m first data frames as a start code block, where m and n are integers greater than or equal to 1.

With reference to an implementation of the second aspect, in a first possible implementation of the second aspect, the location of the first code block of each first data frame in the m first data frames one-to-one corresponds to one alignment marker of one physical layer data frame in the n physical layer data frames.

With reference to the second aspect or the first possible implementation of the second aspect, in a second possible implementation of the second aspect, locations of the first code blocks of at least two first data frames in the m first data frames correspond to one alignment marker of one physical layer data frame in the n physical layer data frames.

With reference to any one of the second aspect, or the first and the second possible implementations of the second aspect, in a third possible implementation of the second aspect, the code block in the code block data stream is a 64B/66B code block.

According to a third aspect, an embodiment of the present invention provides a receiving device for a code block data stream, including: a data frame obtaining module, configured to obtain n physical layer data frames that are on an Ethernet physical interface and that carry m first data frames of the code block data stream; a location determining module, configured to determine a location of the first code block of each first data frame in the m first data frames according to one alignment marker of one physical layer data frame in the n physical layer data frames; and a data stream restoration module, configured to perform data restoration on the code block data stream by using the first code of each first data frame in the m first data frames as a start code block, where m and n are integers greater than or equal to 1.

With reference to an implementation of the third aspect, in a first possible implementation of the third aspect, the location of the first code block of each first data frame in the m first data frames one-to-one corresponds to one alignment marker of one physical layer data frame in the n physical layer data frames.

With reference to the third aspect or the first possible implementation of the third aspect, in a second possible implementation of the third aspect, locations of the first code blocks of at least two first data frames in the m first data frames correspond to one alignment marker of one physical layer data frame in the n physical layer data frames.

With reference to any one of the third aspect, or the first and the second possible implementations of the third aspect, in a third possible implementation of the third aspect, the code block in the code block data stream is a 64B/66B code block.

According to a fourth aspect, an embodiment of the present invention provides a receiving device for a code block data stream, including: a data frame obtaining module, configured to obtain n physical layer data frames that are on an Ethernet physical interface and that carry m first data frames of the code block data stream; a location determining module, configured to determine a location of the first code block of each first data frame in the m first data frames according to one alignment marker of one physical layer data frame in the n physical layer data frames; and a data stream restoration module, configured to perform data restoration on the code block data stream by using the first code of each first data frame in the m first data frames as a start code block, where m and n are integers greater than or equal to 1.

With reference to an implementation of the fourth aspect, in a first possible implementation of the fourth aspect, the location of the first code block of each first data frame in the m first data frames one-to-one corresponds to one alignment marker of one physical layer data frame in the n physical layer data frames.

With reference to the fourth aspect or the first possible implementation of the fourth aspect, in a second possible implementation of the fourth aspect, locations of the first code blocks of at least two first data frames in the m first data frames correspond to one alignment marker of one physical layer data frame in the n physical layer data frames.

With reference to any one of the fourth aspect, or the first and the second possible implementations of the fourth aspect, in a third possible implementation of the fourth aspect, the code block in the code block data stream is a 64B/66B code block.

According to a fifth aspect, an embodiment of the present invention provides a system for sending and receiving a code block data stream, and the system includes a sending device and a receiving device, where the sending device is configured to: add m first data frames carrying the code block data stream to n physical layer data frames on an Ethernet physical interface, identify a location of the first code block of each first data frame in the m first data frames by using one alignment marker of one physical layer data frame in the n physical layer data frames, and send the n physical layer data frames that carry the m first data frames of the code block data stream; and the receiving device is configured to: obtain n physical layer data frames that are on an Ethernet physical interface and that carry m first data frames of the code block data stream, determine a location of the first code block of each first data frame in the m first data frames according to one alignment marker of one physical layer data frame in the n physical layer data frames, and perform data restoration on the code block data stream by using the first code of each first data frame in the m first data frames as a start code block, where
m and n are integers greater than or equal to 1.

With reference to an implementation of the fifth aspect, in a first possible implementation of the fifth aspect, the location of the first code block of each first data frame in the m first data frames one-to-one corresponds to one alignment marker of one physical layer data frame in the n physical layer data frames.

With reference to the fifth aspect or the first possible implementation of the fifth aspect, in a second possible implementation of the fifth aspect, locations of the first code blocks of at least two first data frames in the m first data frames correspond to one alignment marker of one physical layer data frame in the n physical layer data frames.

With reference to any one of the fifth aspect, or the first and the second possible implementations of the fifth aspect, in a third possible implementation of the fourth aspect, the code block in the code block data stream is a 64B/66B code block.

According to a sixth aspect, a sending device is provided, including: a processor, a memory, a bus, and a communications interface, where the memory is configured to store a computer executable instruction, the processor and the memory are connected by using the bus, and when the sending device runs, the processor executes the computer executable instruction stored in the memory, so that the sending device executes the method according to any one of the first aspect or the possible implementations of the first aspect.

According to a sixth aspect, a receiving device is provided, including: a processor, a memory, a bus, and a communications interface, where the memory is configured to store a computer executable instruction, the processor and the memory are connected by using the bus, and when the receiving device runs, the processor executes the computer executable instruction stored in the memory, so that the receiving device executes the method according to any one of the second aspect or the possible implementations of the second aspect.

According to technical solutions provided in the embodiments of the present invention, when a first data frame carrying a code block data stream is transmitted by using an Ethernet physical interface, a start location of the first data frame is identified by using an alignment marker of a physical layer data frame on the Ethernet physical interface, so that a receive end can determine the start location of the first data frame according to the alignment marker. There is no need to perform framing search in the first data frame, so as to improve efficiency in performing framing in the first data frame by a system receiving side, reduce an overhead bit of the first data frame, and reduce system design complexity.

### BRIEF DESCRIPTION OF DRAWINGS

To describe the technical solutions in the embodiments of the present invention or in the prior art more clearly, the following briefly describes the accompanying drawings required for describing the background and the embodiments. Apparently, the accompanying drawings in the following description show merely some embodiments of the present invention, and a person of ordinary skill in the art may still derive other accompanying drawings or embodiments according to these drawings or description without creative efforts, and the present invention aims to cover all these derived accompanying drawings or embodiments.
FIG. 1a is a schematic structural diagram of a basic frame of a flexible Ethernet data frame in the prior art;
FIG. 1b-1 and FIG. 1b-2 are a schematic structural diagram of an overhead code block, 64B/66B code block, of a flexible Ethernet data frame in the prior art;
FIG. 1c-1 and FIG. 1c-2 are a schematic structural diagram of another overhead code block, 64B/66B code block, of a flexible Ethernet data frame in the prior art;
FIG. 2a is a schematic structural diagram of an Ethernet physical interface according to an embodiment of the present invention;
FIG. 2b is a schematic structural diagram of a physical layer data frame on an Ethernet physical interface according to an embodiment of the present invention;
FIG. 2c is a schematic structural diagram of a synchronization apparatus at a PCS sublayer on an Ethernet physical interface according to an embodiment of the present invention;
FIG. 3a is a schematic structural diagram of a basic frame of a flexible Ethernet data frame according to an embodiment of the present invention;

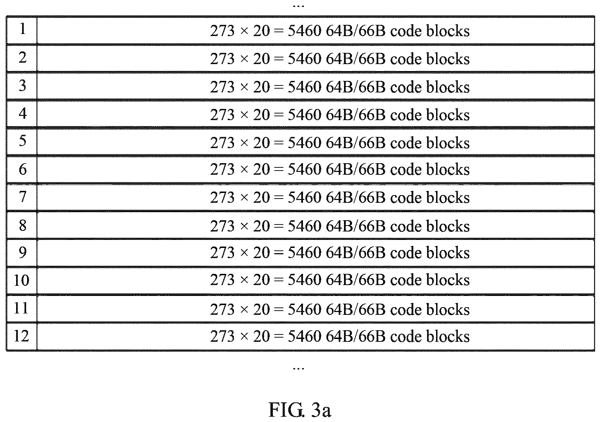

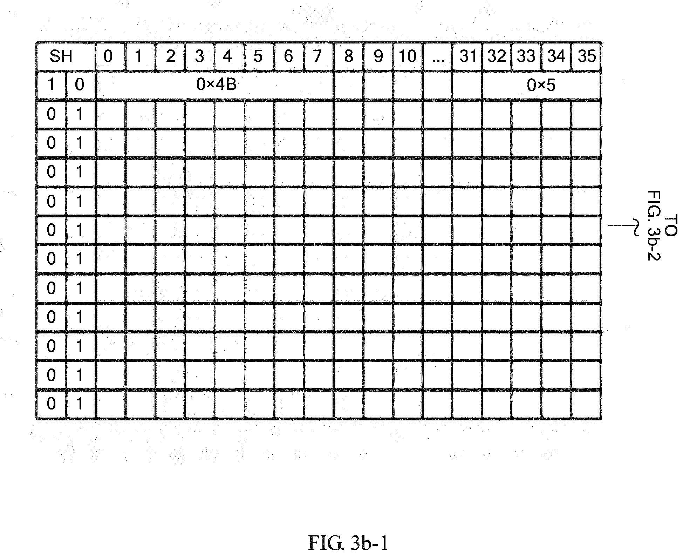

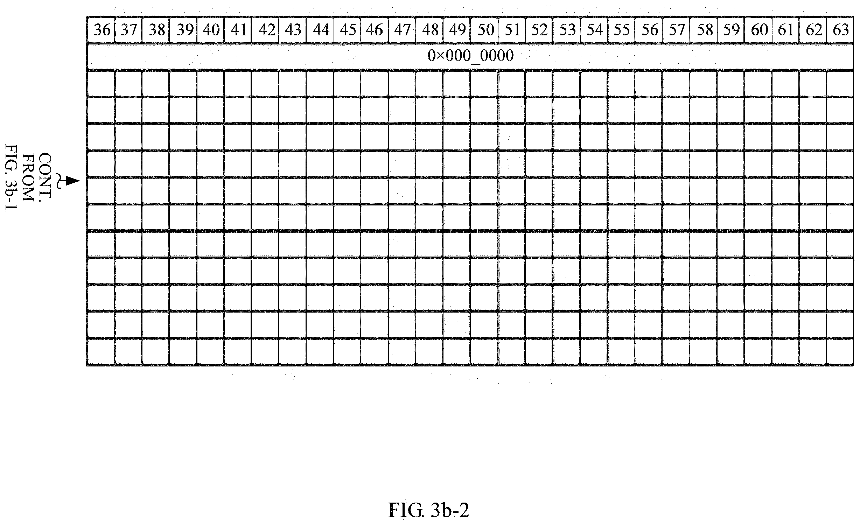

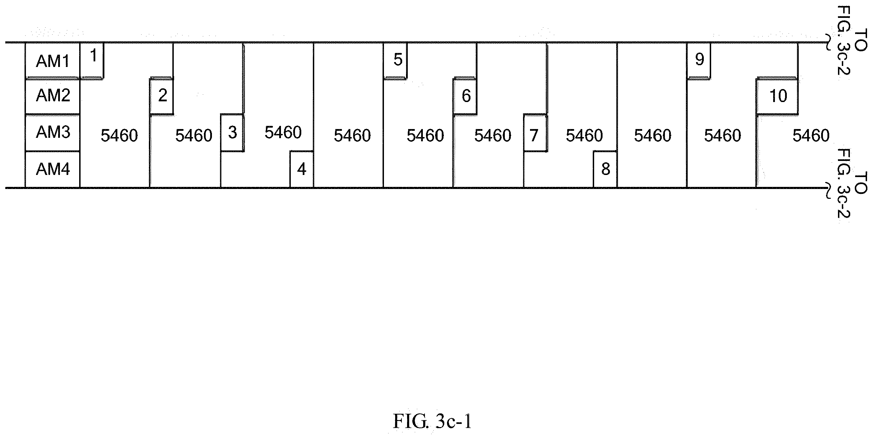

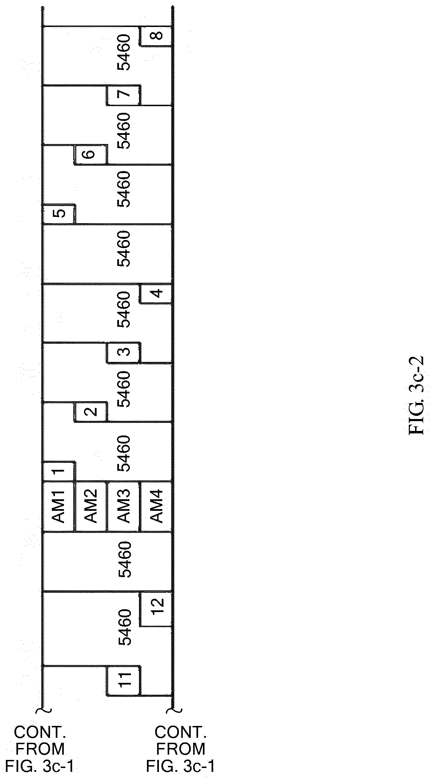

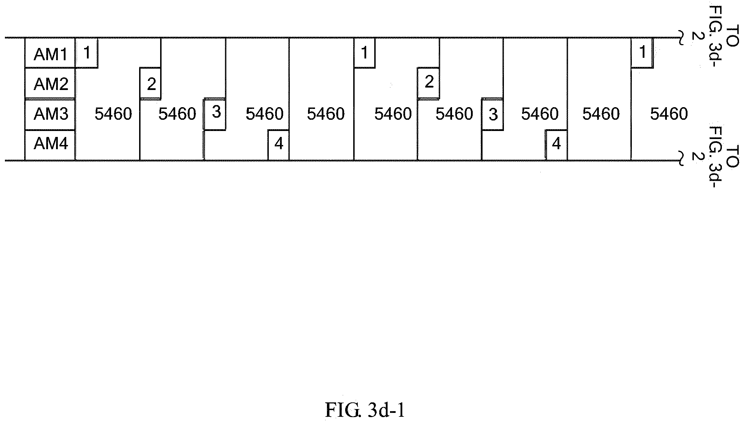

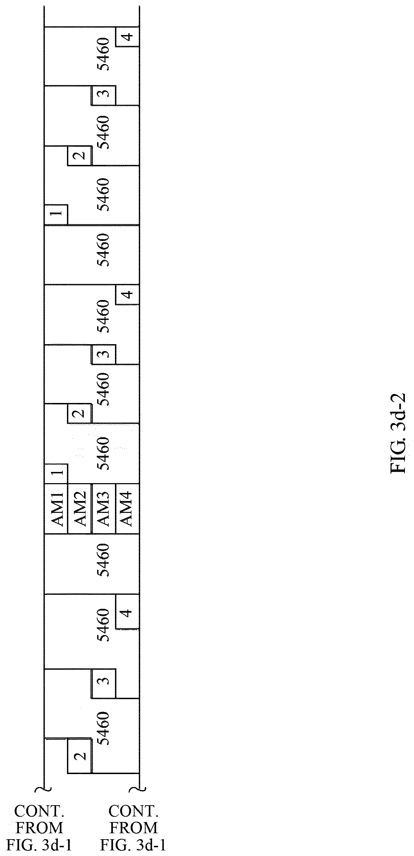

FIG. 3b-1 and FIG. 3b-2 are a schematic structural diagram of an overhead code block, 64B/66B code block, of the flexible Ethernet data frame in FIG. 3a;
FIG. 3c-1 and FIG. 3c-2 are a schematic structural diagram in which a flexible Ethernet data frame is transmitted by using a physical layer data frame on a 40GE Ethernet physical interface according to an embodiment of the present invention;
FIG. 3d-1 and FIG. 3d-2 are a schematic structural diagram in which a flexible Ethernet data frame is transmitted by using a physical layer data frame on a 40GE Ethernet physical interface according to an embodiment of the present invention;

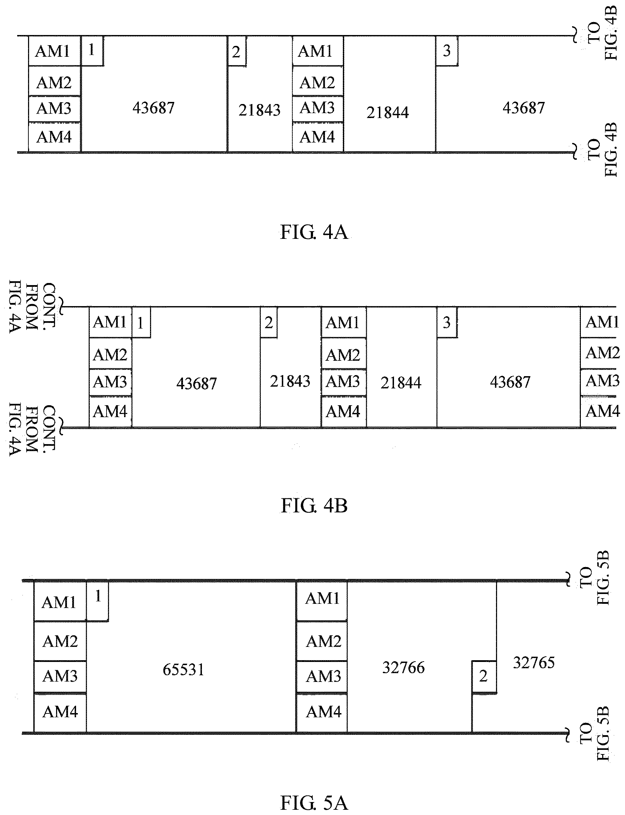

FIG. 4A and FIG. 4B are a schematic structural diagram in which a flexible Ethernet data frame is transmitted by using a physical layer data frame on a 40GE Ethernet physical interface according to an embodiment of the present invention;

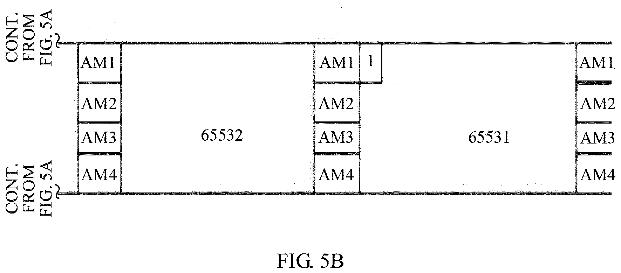

FIG. 5A and FIG. 5B are a schematic structural diagram in which a flexible Ethernet data frame is transmitted by using a physical layer data frame on a 40GE Ethernet physical interface according to an embodiment of the present invention;

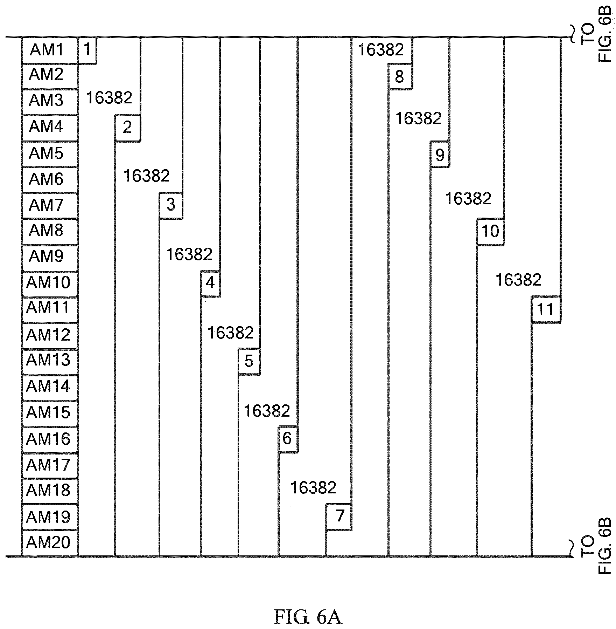

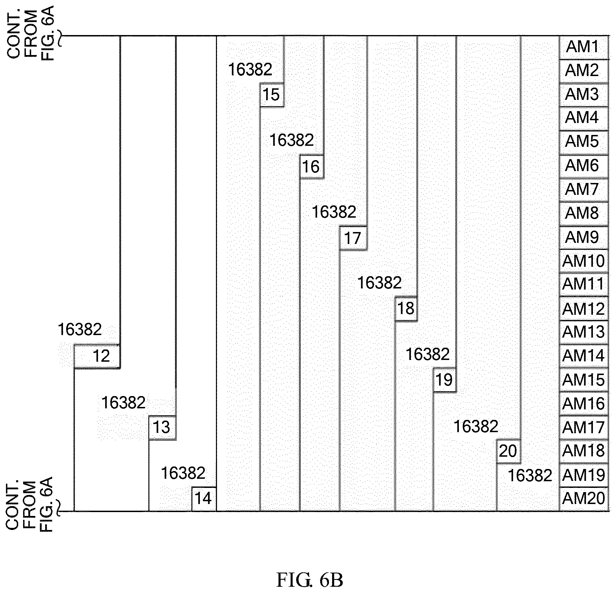

FIG. 6A and FIG. 6B are a schematic structural diagram in which a flexible Ethernet data frame is transmitted by using a physical layer data frame on a 100GE Ethernet physical interface according to an embodiment of the present invention;

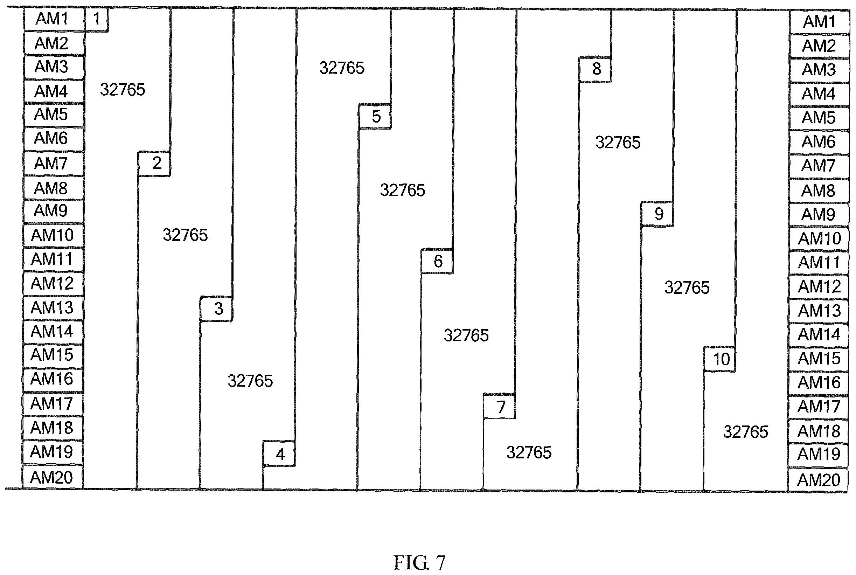

FIG. 7 is a schematic structural diagram in which a flexible Ethernet data frame is transmitted by using a physical layer data frame on a 100GE Ethernet physical interface according to an embodiment of the present invention;

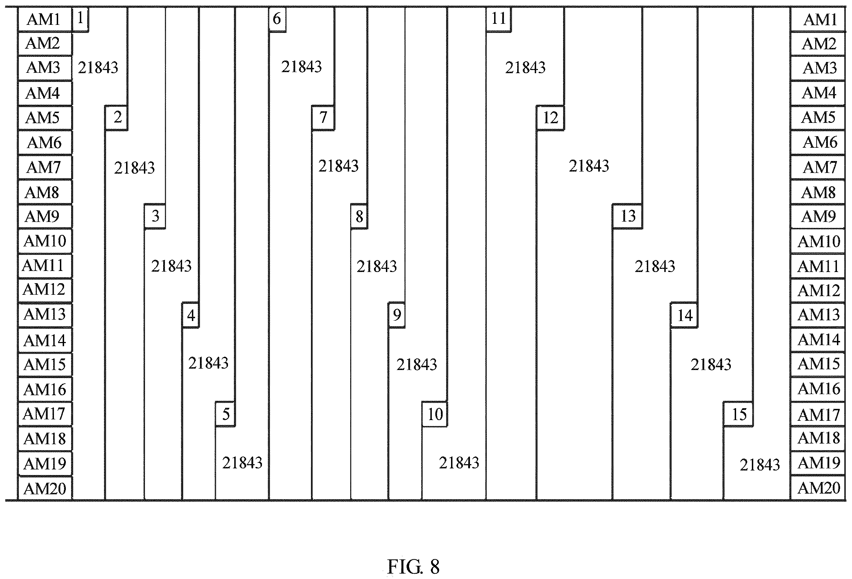

FIG. 8 is a schematic structural diagram in which a flexible Ethernet data frame is transmitted by using a physical layer data frame on a 100GE Ethernet physical interface according to an embodiment of the present invention;

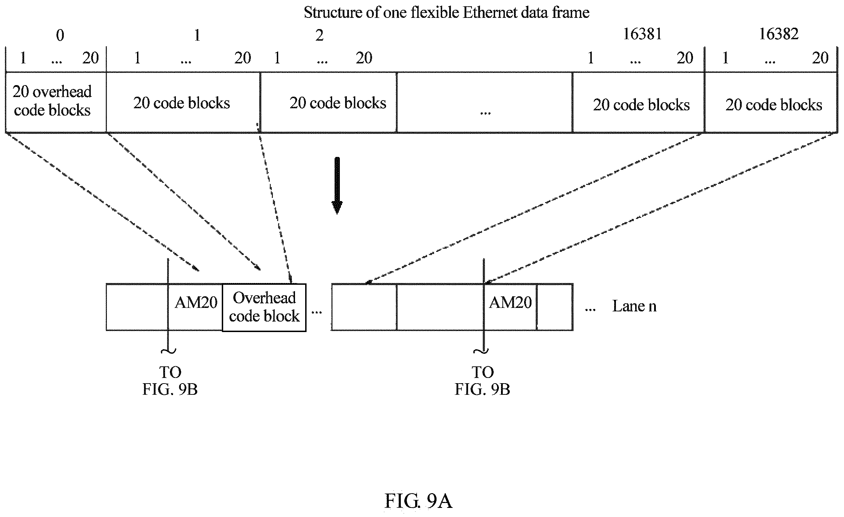

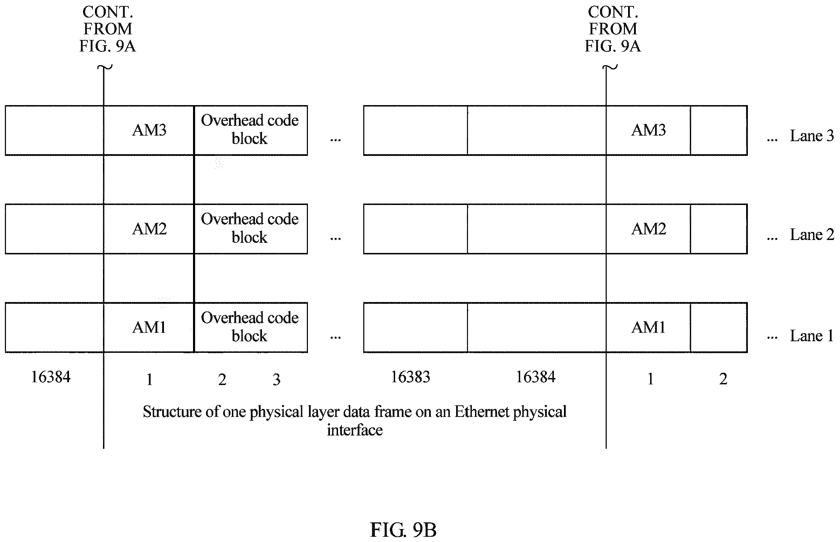

FIG. 9A and FIG. 9B are a schematic structural diagram in which a flexible Ethernet data frame is transmitted by using a physical layer data frame on an Ethernet physical interface according to an embodiment of the present invention;

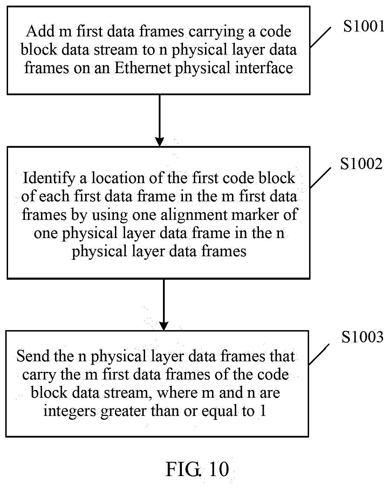

FIG. 10 is an example flowchart of a method for sending a code block data stream according to an embodiment of the present invention;

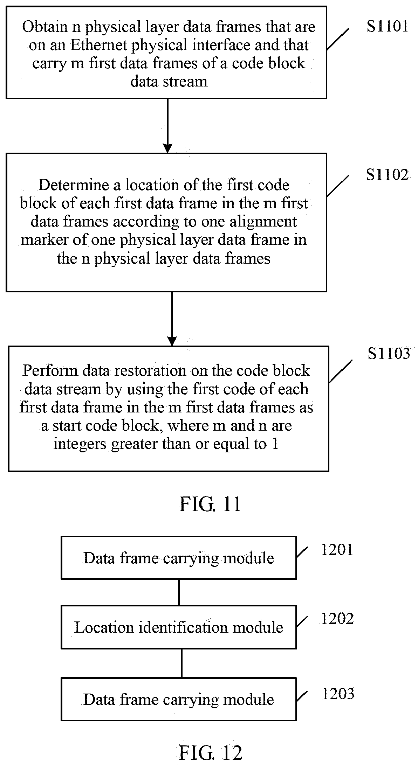

FIG. 11 is an example flowchart of a method for receiving a code block data stream according to an embodiment of the present invention;
FIG. 12 is a schematic diagram of a logical structure of a sending device for a code block data stream according to an embodiment of the present invention;

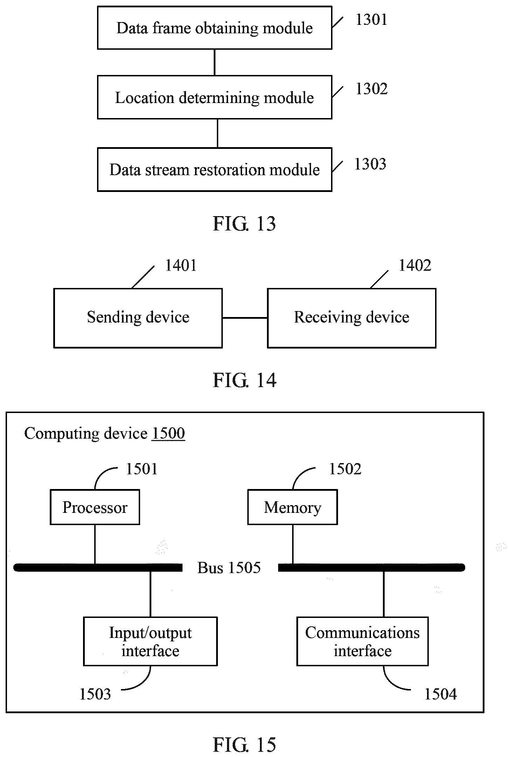

FIG. 13 is a schematic diagram of a logical structure of a receiving device for a code block data stream according to an embodiment of the present invention;
FIG. 14 is a schematic diagram of a logical structure of a system for sending and receiving a code block data stream according to an embodiment of the present invention; and
FIG. 15 is a schematic structural diagram of a computer device according to an embodiment of the present invention.

### DESCRIPTION OF EMBODIMENTS

To make the objectives, technical solutions, and advantages of the present invention clearer and more comprehensible, the following further describes the present invention in detail with reference to the accompanying drawings and embodiments. It should be understood that the specific embodiments described herein are merely used to explain the present invention but are not intended to limit the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

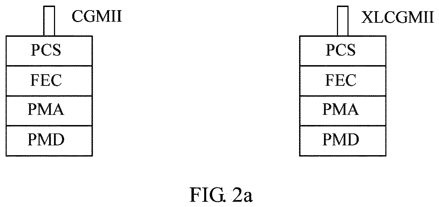

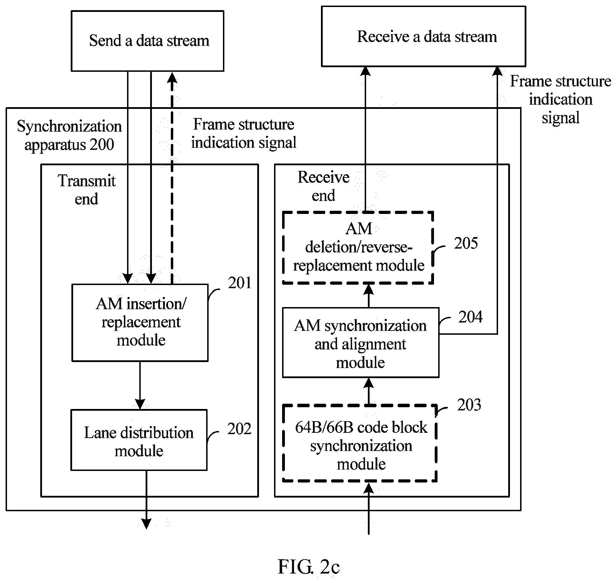

FIG. 2a is a schematic structural diagram of an Ethernet physical interface according to an embodiment of the present invention. As shown in FIG. 2a, an XLGMII (40Gbps Media Independent Inteface, 40Gbps 40GE media independent interface 40Gbps 40GE media independent interface) represents a 40GE Ethernet physical interface with a physical interface rate of 40Gbps, and a CGMII (100Gbps Media Independent Inteface, 100Gbps 100GE media independent interface) represents a 100GE Ethernet physical interface with a physical interface rate of 100Gbps. Both the 40GE and 100GE Ethernet physical interfaces may have structure sublayers such as a PCS (Physical Coding Sub-layer Lane, physical coding sublayer), FEC (Forward Error Correction, forward error correction), PMA (Physical Medium Attachment, physical medium attachment), and PMD (Physical Medium Dependent, physical medium dependent). Sublayers such as the PCS, the FEC, the PMA, and the PMD are located at an Ethernet physical layer.

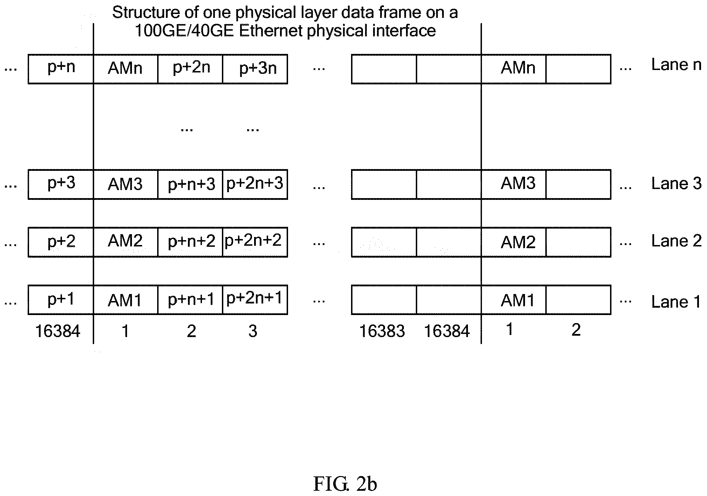

FIG. 2b is a schematic structural diagram of a physical layer data frame on an Ethernet physical interface according to an embodiment of the present invention. As shown in FIG. 2b, the Ethernet physical interface is divided into n lanes. Specifically, for a 40GE Ethernet physical interface, n is 4, and for a 100GE Ethernet physical interface, n is 20. Specifically, the lanes may be virtual lanes, specifically, may be PCS logical lanes. Each PCS logical lane has a period of a structure of 16384 64B/66B code blocks, and each period has one AM alignment marker and 16383 64B/66B code blocks. Serial numbers (such as AM1 to AMn) of the n lanes are identified in AMs. The AMs are used to perform synchronization and alignment on data frames on multiple PCS logical lanes that are used for parallel transmission, so that a receive end restores data streams according to a sequence in which a transmit end distributes the data streams. Other than the AM, 16383 64B/66B code blocks form a bearer code block, used to carry a code block data stream with a periodic frame structure, such as a code block of a flexible Ethernet data frame. Specifically, a physical layer on a 40GE Ethernet physical interface has a data frame structure with a period of four rows × 16384 columns, and specifically, there are 64B/66B code blocks of four rows × 16384 columns included in each period. Similarly, a physical layer on a 100GE Ethernet physical interface has a data frame structure with a period of 20 rows × 16384 columns, and specifically, there are 64B/66B code blocks of 20 rows × 16384 columns included in each period.

FIG. 2b is a schematic structural diagram of a synchronization apparatus 200 at a PCS sublayer on an Ethernet physical interface according to an embodiment of the present invention. The synchronization apparatus 200 may include a transmit end and a receive end. The transmit end and the receive end may be disposed in a same synchronization apparatus, or may be disposed in different synchronization apparatuses. The transmit end includes an AM insertion/replacement module 201 and a lane distribution module 202. The receive end includes a 64B/66B code block synchronization module 203, an AM synchronization and alignment module 204, and an AM deletion/reverse-replacement module 205. In this embodiment of the present invention, when a code block data stream with a periodic frame structure is transmitted by using an Ethernet physical interface, synchronization and alignment processing needs to be performed on the code block data stream at the PCS. In a specific implementation process, a flexible Ethernet data frame is used as an example for description in this embodiment of the present invention.

When a code block data stream with a periodic frame structure is sent on an Ethernet physical interface, at the transmit end, the AM insertion/replacement module 201 inserts at least one AM code block before a start location of a frame in the sent data stream (flexible Ethernet data frame), or replaces, with at least one AM, at least one fixed or reserved code block before a start location of the flexible Ethernet data frame, for example, inserts 20 AM code blocks, AM0 to AM19, before the first code block. Therefore, the AM may be used to identify start location information of the flexible Ethernet data frame. Specifically, the start location information may include a location of a start code block, or may include a location of a start bit. The start location information of the flexible Ethernet data frame may be identified by using a frame structure indication signal in the sent data stream, and the frame structure indication signal may be sent to the AM insertion/replacement module 201. The AM insertion/replacement module 201 determines the start location of the flexible Ethernet data frame by using the frame structure indication signal. Alternatively, the AM insertion/replacement module 201 identifies a location of an AM by using a frame structure indication signal, used to indicate that a start location of a frame structure of the sent data stream (flexible Ethernet data frame) is always at a location of a code block behind the location of the AM. The lane distribution module 202 distributes, with a unit of a 64B/66B code block, the flexible Ethernet data frame to multiple lanes of a physical layer data frame on an Ethernet physical interface. For example, distribution is performed by column. The first 64B/66B code block of the flexible Ethernet data frame is distributed to a location of a 64B/66B code block in the second column on the first lane, the second 64B/66B code block is distributed to a location of a 64B/66B code block in the second column on the second lane, the third 64B/66B code block is distributed to a location of a 64B/66B code block in the second column on the third lane, and so on.

The physical layer data frame that is on the Ethernet physical interface and that carries the flexible Ethernet data frame is received at the receive end. The 64B/66B code block synchronization module 203 implements 64B/66B code block synchronization on each lane based on a 2-bit synchronization header of a 64B/66B code block. For example, it is determined whether any two bits of any 64B/66B code block are 10 or 01, that is, an SH. If the any two bits are 10 or 01, an SH of a next 64B/66B code block is searched for, until 64B/66B code block synchronization is implemented after SHs of several 64B/66B code blocks are found. The 64B/66B code block synchronization module 203 is an optional function module, and may not perform 64B/66B code block synchronization. The AM synchronization and alignment module 204 is directly used to search for AMs of all lanes, sort the AMs of all the lanes, and determine the start location of the flexible Ethernet data frame by using a location of an AM. An AM of each lane further identifies a serial number of the lane, such as AM1, AM2, or AM3. Because data arrival sequences on different lanes may be different, AMs of all lanes need to be sorted according to lane serial numbers identified by the AMs. Because the transmit end identifies the start location of the flexible Ethernet data frame by using an AM, the start location of the flexible Ethernet data frame may be determined by determining a location of the AM, so as to implement synchronization and alignment of the flexible Ethernet data frame. Specifically, the AM synchronization and alignment module 204 may further identify the start location of the flexible Ethernet data frame by using a frame structure indication signal, and send the frame structure indication signal from the receive end, so as to restore a received data stream according to the start location of the Ethernet data frame. After the AM synchronization and alignment module 204 indicates the start location of the flexible Ethernet data frame, the AM deletion/reverse-replacement module 204 deletes an AM corresponding to the flexible Ethernet data frame, or replaces the AM with a code block before insertion. Specifically, the AM deletion/reverse-replacement module 205 is an optional function module.

In this embodiment of the present invention, by properly designing a frame period of a flexible Ethernet data frame, a start location of the flexible Ethernet data frame is aligned with a fixed location of a physical layer data frame on an Ethernet physical interface. For example, the first code block of the flexible Ethernet data frame is configured at a location of the first bearer code block on the first lane of the physical layer data frame on the Ethernet physical interface, and an AM is inserted before the first bearer code block of the flexible Ethernet data frame. In a specific implementation process, a ratio of a period length of a subframe of the flexible Ethernet data frame to a period length of a bearer code block of the physical layer data frame on the Ethernet physical interface may be 1:m, or may be n:m, where m and n are positive integers greater than or equal to 1. In this embodiment of the present invention, a start location of a flexible Ethernet data frame is determined by using an AM of a physical layer data frame on an Ethernet physical interface, so that there is no need to perform framing search in the flexible Ethernet data frame. Therefore, framing efficiency in a data frame is improved, and an overhead bit of the flexible Ethernet data frame is reduced.

FIG. 3a is a schematic structural diagram of a basic frame of a flexible Ethernet data frame according to an embodiment of the present invention. As shown in FIG. 3a, a period length of one subframe of a flexible Ethernet data frame may be 5461 64B/66B code blocks. Correspondingly, one physical layer data frame on a 40GE Ethernet physical interface may carry 12 subframes of a flexible Ethernet data frame. One physical layer data frame on a 100GE Ethernet physical interface may carry 60 subframes of a flexible Ethernet data frame.

In this embodiment, a physical layer data frame on a 40GE Ethernet physical interface is used as an example for description, and 12 subframe structures may form one basic frame. Therefore, a period length of one basic frame of a flexible Ethernet data frame is equal to a length of a bearer code block in one physical layer data frame period on a 40GE Ethernet physical interface. A basic frame period of a flexible Ethernet data frame includes an overhead area and a payload area. The overhead area includes k 64B/66B code blocks that are overhead code blocks, and the payload area includes p 64B/66B code blocks, where p and k may be any positive integers greater than or equal to 1. FIG. 3b-1 and FIG. 3b-2 are a schematic structural diagram of an overhead code block, 64B/66B code block, of the flexible Ethernet data frame in FIG. 3a. In the overhead area of the flexible Ethernet data frame, optionally, there may be all data overhead code blocks, or at least one control code block that has a specific bit pattern for distinguishing an overhead code block from another 64B/66B code block may be included. The specific bit pattern includes SH = 10, and type bits 0x4B and 0x5. Specifically, an overhead code block with a specific bit pattern may indicate that a type of a data frame is a flexible Ethernet data frame, and may further indicate a start location of a flexible Ethernet data frame. As shown in FIG. 3b-1 and FIG. 3b-2, in an overhead code block, a control code block may identify the first subframe of a basic frame, that is, a start location of the basic frame. In a specific implementation process, an Ethernet physical interface may have different working modes, such as a flexible Ethernet mode and a conventional Ethernet mode. When an Ethernet physical interface distinguishes between the different working modes, the Ethernet physical interface needs to identify a type of a data frame. For example, at least one overhead code block of a basic frame needs to be defined as a specific code block that can be distinguished from another code block, is used to indicate a type of a data frame, and may further indicate a protocol version and the like. For example, type bits 0x4B and 0x5 on a control code block (SH = 10) may be used to indicate that a type of a data frame is a flexible Ethernet data frame. Optionally, when an Ethernet physical interface is a dedicated interface, that is, there is no need to distinguish between different working modes, type bits 0x4B and 0x5 may not be defined, so as to reduce overheads.

In a specific implementation process, when a flexible Ethernet data frame is transmitted on a 40GE Ethernet physical interface, the transmit end adds the flexible Ethernet data frame to physical layer data on the Ethernet physical interface. Specifically, the first 64B/66B code block of a basic frame of the flexible Ethernet data frame may be configured at a fixed location of a physical layer data frame on the Ethernet physical interface. For example, the first 64B/66B code block of the first subframe of the basic frame of the flexible Ethernet data frame is configured at a location of the first bearer code block on the first lane of the physical layer data frame on the Ethernet physical interface, and an AM is inserted before the first bearer code block. Serial numbers, such as AM1, AM2, AM3, and AM4, of all lanes may be identified in AMs. The AMs are used to perform synchronization and alignment on a flexible Ethernet data frame on four parallel transmission lanes, so that the receive end determines a start location of the flexible Ethernet data frame by searching for the AMs. The transmit end distributes, with a unit of a 64B/66B code block, the flexible Ethernet data frame to four lanes of a physical layer data frame on a 40GE Ethernet physical interface to perform parallel transmission. When receiving the flexible Ethernet data frame that is transmitted in parallel by using four lanes, the receive end implements 64B/66B code block synchronization on each lane based on a 2-bit synchronization header of a 64B/66B code block. Then, an AM of each lane is searched for. Optionally, an AM of each lane may be directly searched for without 64B/66B code block synchronization. The AM of each lane identifies a serial number of the lane, so as to synchronize and lock the AMs of all the lanes. Arrival sequences of the flexible Ethernet data frame on different lanes may be different, and the arrival sequences of the flexible Ethernet data frame on different lanes may be out of order, for example, a data frame on the second lane arrives earlier than a data frame on the first lane. Therefore, differential delay compensation is performed on the flexible Ethernet data frame on each lane, and lanes are sorted according to AM1, AM2, AM3, and AM4. Specifically, a start location of a basic frame of a flexible Ethernet data frame is determined by using a fixed location of a physical layer data frame on an Ethernet physical interface. For example, the start location of the basic frame of the flexible Ethernet data frame is a location of the first bearer code block of the physical layer data frame on the Ethernet physical interface. Because an AM is inserted before the location of the first bearer code block of the physical layer data frame on the Ethernet physical interface, the start location of the flexible Ethernet data frame may be determined by using the AM. The AM may be deleted after synchronization and alignment is performed on the flexible Ethernet data frame. Data restoration processing is performed on the flexible Ethernet data frame according to the start location of the flexible Ethernet data frame.

FIG. 3c-1 and FIG. 3c-2 are a schematic structural diagram in which a flexible Ethernet data frame is transmitted by using a physical layer data frame on a 40GE Ethernet physical interface according to an embodiment of the present invention. As shown in FIG. 3c-1 and FIG. 3c-2, specifically, a period length of one basic frame of a flexible Ethernet data frame may be equal to a length of a bearer code block in one physical layer data frame period on a 40GE Ethernet physical interface. Therefore, one physical layer data frame on a 40GE Ethernet physical interface carries one basic frame of a flexible Ethernet data frame. One basic frame may include 12 subframes, and the 12 subframes are sequentially distributed, with a unit of a 64B/66B code block, to four lanes of the physical layer data frame on the Ethernet physical interface. Specifically, distribution may be performed by column. For example, the first 64B/66B code block of a flexible Ethernet data frame is distributed to a location of the first bearer code block on the first lane, the second 64B/66B code block of the flexible Ethernet data frame is distributed to a location of the first bearer code block on the second lane, the third 64B/66B code block of the flexible Ethernet data frame is distributed to a location of the first bearer code block on the third lane, the fourth 64B/66B code block of the flexible Ethernet data frame is distributed to a location of the first bearer code block on the fourth lane, the fifth 64B/66B code block of the flexible Ethernet data frame is distributed to a location of the second bearer code block on the first lane, and so on.

In this embodiment, one basic frame may include four subframes. Therefore, a period length of three basic frames of a flexible Ethernet data frame is equal to a length of one bearer code block in a physical layer data frame period on an Ethernet physical interface. FIG. 3d-1 and FIG. 3d-2 are a schematic structural diagram in which a flexible Ethernet data frame is transmitted by using a physical layer data frame on a 40GE Ethernet physical interface according to an embodiment of the present invention. As shown in FIG. 3d-1 and FIG. 3d-2, start locations of three basic frames of a flexible Ethernet data frame may be indicated by using three fixed locations in a physical layer data frame on an Ethernet physical interface. For example, the three fixed locations are respectively the first bearer code block on the first lane, the 5462^{nd} bearer code block on the first lane, and the 10923^{rd} bearer code block on the first lane. A data frame processing process is similar to that in the foregoing embodiment, and is not repeatedly described herein.

FIG. 4A and FIG. 4B are a schematic structural diagram in which a flexible Ethernet data frame is transmitted by using a physical layer data frame on a 40GE Ethernet physical interface according to an embodiment of the present invention. As shown in FIG. 4A and FIG. 4B, a period length of three subframes of a flexible Ethernet data frame is equal to a length of a bearer code block in two physical layer data frame periods on an Ethernet physical interface. Therefore, two physical layer data frames on an Ethernet physical interface carry three subframes of a flexible Ethernet data frame. Because three subframes may form one basic frame, two physical layer data frames on an Ethernet physical interface carry one basic frame of a flexible Ethernet data frame. 16383 × 8 = 3 × 43688, and therefore, a period length of one subframe of a flexible Ethernet data frame is 43688 64B/66B code blocks. FIG. 5A and FIG. 5B are a schematic structural diagram in which a flexible Ethernet data frame is transmitted by using a physical layer data frame on a 40GE Ethernet physical interface according to an embodiment of the present invention. As shown in FIG. 5A and FIG. 5B, a period length of two subframes of a flexible Ethernet data frame is equal to a length of a bearer code block in three physical layer data frame periods on an Ethernet physical interface. Therefore, three physical layer data frames on an Ethernet physical interface carry two subframes of a flexible Ethernet data frame. Because two subframes may form one basic frame, three physical layer data frames on an Ethernet physical interface carry one basic frame of a flexible Ethernet data frame. 16383 × 12 = 2 × 98298, and therefore, a period length of a subframe of a flexible Ethernet data frame is 98298 64B/66B code blocks. In the embodiment corresponding to FIG. 4A and FIG. 4B or FIG. 5A and FIG. 5B, the first 64B/66B code block of a basic frame of a flexible Ethernet data frame is configured at a fixed location of a physical layer data frame on an Ethernet physical interface, for example, configured in the first bearer code block on the first lane of a physical layer data frame on an Ethernet physical interface. In this embodiment of the present invention, the receive end may search for a start location of a flexible Ethernet data frame by using an AM. If a start location of a flexible Ethernet data frame cannot be found in a physical layer data frame period on an Ethernet physical interface, searching is performed in a next physical layer data frame period on an Ethernet physical interface.

A 100GE Ethernet physical interface is used as an example for description, and design for a period of a flexible Ethernet data frame is specifically described. A data frame processing process is similar to that in the foregoing embodiment, and is not repeatedly described herein.

FIG. 6A and FIG. 6B are a schematic structural diagram in which a flexible Ethernet data frame is transmitted by using a physical layer data frame on a 100GE Ethernet physical interface according to an embodiment of the present invention. A frame period of one physical layer data frame on a 100GE Ethernet physical interface is 64B/66B code blocks of 20 rows × 16384 columns. As shown in FIG. 6A and FIG. 6B, a period length of a subframe of a flexible Ethernet data frame may be 16383 64B/66B code blocks. A period length of 20 subframes of a flexible Ethernet data frame is equal to a length of a bearer code block in one physical layer data frame period on a 100GE Ethernet physical interface. Therefore, one physical layer data frame on an Ethernet physical interface carries 20 subframes of a flexible Ethernet data frame. Because 20 subframes may form one basic frame, one physical layer data frame on an Ethernet physical interface carries one basic frame of a flexible Ethernet data frame.

FIG. 7 is a schematic structural diagram in which a flexible Ethernet data frame is transmitted by using a physical layer data frame on a 100GE Ethernet physical interface according to an embodiment of the present invention. As shown in FIG. 7, a period length of one subframe of a flexible Ethernet data frame may be 32766 64B/66B code blocks. 20 × 16383=10 × 32766, and therefore, a period length of 10 subframes of a flexible Ethernet data frame is equal to a length of a bearer code block in one physical layer data frame period on a 100GE Ethernet physical interface. Therefore, one physical layer data frame on an Ethernet physical interface carries 10 subframes of a flexible Ethernet data frame. Because 10 subframes may form one basic frame, one physical layer data frame on an Ethernet physical interface carries one basic frame of a flexible Ethernet data frame.

FIG. 8 is a schematic structural diagram in which a flexible Ethernet data frame is transmitted by using a physical layer data frame on a 100GE Ethernet physical interface according to an embodiment of the present invention. As shown in FIG. 8, a period length of one subframe of a flexible Ethernet data frame may be 21844 64B/66B code blocks. 20 × 16383=15 × 21844, and therefore, a period length of 15 subframes of a flexible Ethernet data frame is equal to a length of a bearer code block in one physical layer data frame period on a 100GE Ethernet physical interface. Therefore, one physical layer data frame on an Ethernet physical interface carries 15 subframes of a flexible Ethernet data frame. Because five subframes may form one basic frame, one physical layer data frame on an Ethernet physical interface carries three basic frames of a flexible Ethernet data frame. Optionally, 15 subframes may form one basic frame, and therefore, one physical layer data frame on an Ethernet physical interface carries one basic frame of a flexible Ethernet data frame.

In this embodiment of the present invention, design of period lengths of a basic frame and a subframe of a flexible Ethernet data frame are not limited to implementations in the foregoing embodiments, and this is not limited in the present invention. In some implementations, proper interframe padding and shaping may be performed on a flexible Ethernet data frame. Padding and shaping may specifically include moving or exchanging locations of an overhead code block and a payload code block according to a specified rule, deleting a specific code block, and the like. The receive end may perform data restoration processing according to a specified rule. Specifically, padding and shaping is first performed on a frame structure of a flexible Ethernet data frame, and then a start location of a flexible Ethernet data frame after the padding and shaping is enabled to align with a fixed location of a physical layer data frame on an Ethernet physical interface.

In this embodiment of the present invention, a frame period of a flexible Ethernet data frame is properly designed, and a start location of the flexible Ethernet data frame is indicated by using a fixed location of a physical layer data frame on an Ethernet physical interface. Therefore, rapid framing search can be performed in the flexible Ethernet data frame, with no need to define a fixed bit in the flexible Ethernet data frame for framing search.

FIG. 9A and FIG. 9B are a schematic structural diagram in which a flexible Ethernet data frame is transmitted by using a physical layer data frame on an Ethernet physical interface according to an embodiment of the present invention. As shown in FIG. 9A and FIG. 9B, a 100GE Ethernet physical interface is divided into 20 timeslots, and each timeslot is 5G. A 40GE Ethernet physical interface may be divided into 20 timeslots, and each timeslot is 2G. When timeslot division is performed on a physical interface, the physical interface may be divided into two timeslots, eight timeslots, 40 timeslots, or the like, and this is not limited in this embodiment of the present invention. In an example of this embodiment for description, a 100GE Ethernet interface is divided into 20 timeslots. It is assumed that a subframe that is corresponding to one timeslot and that is of a flexible Ethernet data frame has 16383 64B/66B code blocks, and subframes of a flexible Ethernet data frame in 20 timeslots have 20 × 16383= 327660 64B/66B code blocks. A basic frame of a flexible Ethernet data frame may be obtained by performing interleaving and stacking on subframes of a flexible Ethernet data frame in different timeslots. Specifically, stacking subframes of a flexible Ethernet data frame in 20 timeslots may form one basic frame, and each timeslot of a flexible Ethernet data basic frame corresponds to one subframe. For example, the first to the 20^{th} 64B/66B code blocks of a basic frame of a flexible Ethernet data frame are respectively overhead code blocks of subframes in 20 timeslots, the 21^{st} to 40^{th} 64B/66B code blocks of the basic frame of the flexible Ethernet data frame are respectively the first 64B/66B code blocks of subframes in 20 timeslots, and so on. A period length of one basic frame of a flexible Ethernet data frame is equal to a length of a bearer code block in one physical layer data frame period on a 100GE Ethernet physical interface. Therefore, one physical layer data frame on a 100GE Ethernet physical interface may carry one basic frame of a flexible Ethernet data frame. In 20 lanes of a physical layer data frame on a 100GE Ethernet physical interface, each lane may correspond to one timeslot of one basic frame of a flexible Ethernet data frame. Specifically, the first 64B/66B code block of a basic frame of a flexible Ethernet data frame is distributed to a location of the first bearer code block on the first lane, the second 64B/66B code block of the basic frame of the flexible Ethernet data frame is distributed to a location of the first bearer code block on the second lane, the third 64B/66B code block of the basic frame of the flexible Ethernet data frame is distributed to a location of the first bearer code block on the third lane, and so on.

Optionally, subframes of a flexible Ethernet data frame in two timeslots or 40 timeslots may form one basic frame.

In a specific implementation process, when a flexible Ethernet data frame is transmitted on a 100GE Ethernet physical interface, the transmit end adds the flexible Ethernet data frame to physical layer data on the Ethernet physical interface. Specifically, the first 64B/66B code block of a basic frame of the flexible Ethernet data frame may be configured at a fixed location of a physical layer data frame on the Ethernet physical interface. For example, the first 64B/66B code block of the basic frame of the flexible Ethernet data frame is configured at a location of the first bearer code block on the first lane of the physical layer data frame on the Ethernet physical interface, and an AM is inserted before the first bearer code block. Serial numbers, such as AM1, AM2, ..., and AM20, of all lanes may be identified by AMs. The AMs are used to perform synchronization and alignment on a flexible Ethernet data frame on 20 parallel transmission lanes, so that the receive end determines a start location of the flexible Ethernet data frame by searching for an AM. The transmit end distributes, with a unit of a 64B/66B code block and by means of time division multiplexing, a flexible Ethernet data frame to 20 lanes of a physical layer data frame on a 100GE Ethernet physical interface. Therefore, one lane of the physical layer data frame on the 100GE Ethernet physical interface corresponds to one timeslot of one basic frame of the flexible Ethernet data frame. When receiving the flexible Ethernet data frame that is transmitted in parallel by using 20 lanes, the receive end implements 64B/66B code block synchronization on each lane based on a 2-bit synchronization header of a 64B/66B code block. Then, an AM of each lane is searched for. Optionally, an AM of each lane may be directly searched for without 64B/66B code block synchronization. The AM of each lane identifies a serial number of the lane, so as to synchronize and lock the AMs of all the lanes. Arrival sequences of the flexible Ethernet data frame on different lanes may be different, and the arrival sequences of the flexible Ethernet data frame on different lanes may be out of order, for example, a data frame on the second lane arrives earlier than a data frame on the first lane. Therefore, differential delay compensation is performed on a flexible Ethernet data frame on each lane, and lanes are sorted according to AM1, AM2, ..., and AM20. Specifically, a start location of a basic frame of a flexible Ethernet data frame is determined by using a fixed location of a physical layer data frame on an Ethernet physical interface. For example, the start location of the basic frame of the flexible Ethernet data frame is a location of the first bearer code block of the physical layer data frame on the Ethernet physical interface. Because an AM is inserted before the location of the first bearer code block of the physical layer data frame on the Ethernet physical interface, the start location of the flexible Ethernet data frame may be determined by using the AM. The AM may be deleted after synchronization and alignment is performed on the flexible Ethernet data frame. Data restoration processing is performed on the flexible Ethernet data frame according to the start location of the flexible Ethernet data frame.

Specifically, obtaining a basic frame of a flexible Ethernet data frame by performing interleaving and stacking on subframes of the flexible Ethernet data frame in different timeslots is not limited to the foregoing implementations. For example, for a flexible Ethernet data frame transmitted on a 40GE Ethernet physical interface, a period length of one subframe of the flexible Ethernet data frame may be 5461 64B/66B code blocks, and correspondingly, a period length of one basic frame may be 5461 × 12 64B/66B code blocks. One basic frame may be divided into two timeslots, eight timeslots, 20 timeslots, 40 timeslots, or the like.

In this embodiment of the present invention, a basic frame of a flexible Ethernet data frame is obtained by means of timeslot stacking, and a start location of the flexible Ethernet data frame is indicated by using a fixed location of a physical layer data frame on an Ethernet physical interface. Therefore, rapid framing search can be performed in the flexible Ethernet data frame, with no need to define a fixed bit in the flexible Ethernet data frame for framing search.

In this embodiment of the present invention, only forming a basic frame by using subframes of a flexible Ethernet data frame is used as an example for description. Further, basic frames of a flexible Ethernet data frame may form a multiframe. In addition, a subframe of a flexible Ethernet data frame may be directly transmitted. The present invention sets no limitation thereto.

In this embodiment of the present invention, only a 100GE Ethernet physical interface and a 40GE Ethernet physical interface are used as examples for description, but the present invention is not limited thereto. With evolution of a network, there may be a 400GE Ethernet physical interface in the network. For the 400GE Ethernet physical interface, technical solutions of the present invention may also be used: Rapid framing search in a flexible Ethernet data frame is implemented by using an AM in a physical layer data frame on an Ethernet physical interface. This is not repeatedly described herein.

FIG. 10 is an example flowchart of a method for sending a code block data stream according to an embodiment of the present invention. As shown in FIG. 10, the method includes the following steps.

S1001. Add m first data frames carrying the code block data stream to n physical layer data frames on an Ethernet physical interface.

In a specific implementation process, bearer code blocks of the n physical layer data frames on the Ethernet physical interface are used to carry the m first data frames of the code block data stream. Specifically, the first data frame may be a flexible Ethernet data frame with a periodic frame structure, and a code block may be a 64B/66B code block.

S1002. Identify a location of the first code block of each first data frame in the m first data frames by using one alignment marker of one physical layer data frame in the n physical layer data frames.

Specifically, the location of the first code block of each first data frame one-to-one corresponds to any alignment marker of one physical layer data frame. Optionally, locations of the first code blocks of at least two first data frames correspond to one alignment marker of any physical layer data frame.

S1003. Send the n physical layer data frames that carry the m first data frames of the code block data stream, where m and n are integers greater than or equal to 1.

Specifically, a physical layer data frame on an Ethernet physical interface may be divided into multiple lanes, and the m first data frames of the code block data stream may be transmitted in parallel on the multiple lanes.

In this embodiment of the present invention, when a first data frame carrying a code block data stream is sent by using an Ethernet physical interface, the first code block of the first data frame is identified by using an alignment marker of a physical layer data frame, so as to identify a start location of the first data frame. Therefore, there is no need to perform framing search in the first data frame, so as to improve efficiency in performing framing in the first data frame by a system receiving side, reduce an overhead bit of the first data frame, and reduce system design complexity.

FIG. 11 is an example flowchart of a method for receiving a code block data stream according to an embodiment of the present invention. As shown in FIG. 11, the method includes the following steps.

S1101. Obtain n physical layer data frames that are on an Ethernet physical interface and that carry m first data frames of the code block data stream.

In a specific implementation process, bearer code blocks of the n physical layer data frames on the Ethernet physical interface are used to carry the m first data frames of the code block data stream. Specifically, the first data frame may be a flexible Ethernet data frame with a periodic frame structure, and a code block may be a 64B/66B code block.

S1102. Determine a location of the first code block of each first data frame in the m first data frames according to one alignment marker of one physical layer data frame in the n physical layer data frames.

Specifically, the location of the first code block of each first data frame one-to-one corresponds to any alignment marker of one physical layer data frame. Optionally, locations of the first code blocks of at least two first data frames correspond to one alignment marker of any physical layer data frame.

S1103. Perform data restoration on the code block data stream by using the first code of each first data frame in the m first data frames as a start code block, where m and n are integers greater than or equal to 1.

Specifically, after the first code blocks of the m first data frames are determined, the first code block of each first data frame is used as a start code block of the first data frame to perform data restoration.

In this embodiment of the present invention, when a first data frame carrying a code block data stream is received by using an Ethernet physical interface, the first code block of the first data frame is determined by using an alignment marker of a physical layer data frame, and the first code block of the first data frame is used as a start code block to restore the code block data stream. There is no need to perform framing search in the first data frame, so as to improve efficiency in performing framing in the first data frame by a system receiving side, reduce an overhead bit of the first data frame, and reduce system design complexity.

FIG. 12 is a schematic diagram of a logical structure of a sending device for a code block data stream according to an embodiment of the present invention. As shown in FIG. 12, the sending device includes a data frame carrying module 1201, a location identification module 1202, and a sending module 1203.

The data frame carrying module 1201 is configured to add m first data frames carrying the code block data stream to n physical layer data frames on an Ethernet physical interface.

In a specific implementation process, bearer code blocks of the n physical layer data frames on the Ethernet physical interface are used to carry the m first data frames of the code block data stream. Specifically, the first data frame may be a flexible Ethernet data frame with a periodic frame structure, and a code block may be a 64B/66B code block.

The location identification module 1202 is configured to identify a location of the first code block of each first data frame in the m first data frames by using one alignment marker of one physical layer data frame in the n physical layer data frames.

Specifically, the location of the first code block of each first data frame one-to-one corresponds to any alignment marker of one physical layer data frame. Optionally, locations of the first code blocks of at least two first data frames correspond to one alignment marker of any physical layer data frame.

The sending module 1203 is configured to send the n physical layer data frames that carry the m first data frames of the code block data stream, where m and n are integers greater than or equal to 1.

Specifically, a physical layer data frame on an Ethernet physical interface may be divided into multiple lanes, and the m first data frames of the code block data stream may be transmitted in parallel on the multiple lanes.

In this embodiment of the present invention, when the sending device sends, by using an Ethernet physical interface, a first data frame carrying a code block data stream, the first code block of the first data frame is identified by using an alignment marker of a physical layer data frame, so as to identify a start location of the first data frame. Therefore, there is no need to perform framing search in the first data frame, so as to improve efficiency in performing framing in the first data frame by a system receiving side, reduce an overhead bit of the first data frame, and reduce system design complexity.

FIG. 13 is a schematic diagram of a logical structure of a receiving device for a code block data stream according to an embodiment of the present invention. As shown in FIG. 13, the receiving device includes a data frame obtaining module 1301, a location determining module 1302, and a data stream restoration module 1303.

The data frame obtaining module 1301 is configured to obtain n physical layer data frames that are on an Ethernet physical interface and that carry m first data frames of the code block data stream.

In a specific implementation process, bearer code blocks of the n physical layer data frames on the Ethernet physical interface are used to carry the m first data frames of the code block data stream. Specifically, the first data frame may be a flexible Ethernet data frame with a periodic frame structure, and a code block may be a 64B/66B code block.

The location determining module 1302 is configured to determine a location of the first code block of each first data frame in the m first data frames according to one alignment marker of one physical layer data frame in the n physical layer data frames.

Specifically, the location of the first code block of each first data frame one-to-one corresponds to any alignment marker of one physical layer data frame. Optionally, locations of the first code blocks of at least two first data frames correspond to one alignment marker of any physical layer data frame.

The data stream restoration module 1303 is configured to perform data restoration on the code block data stream by using the first code of each first data frame in the m first data frames as a start code block, where m and n are integers greater than or equal to 1.

Specifically, after the first code blocks of the m first data frames are determined, the first code block of each first data frame is used as a start code block of the first data frame to perform data restoration.

In this embodiment of the present invention, when the receiving device receives, by using an Ethernet physical interface, a first data frame carrying a code block data stream, the first code block of the first data frame is determined by using an alignment marker of a physical layer data frame, and the first code block of the first data frame is used as a start code block to restore the code block data stream. There is no need to perform framing search in the first data frame, so as to improve efficiency in performing framing in the first data frame by a system receiving side, reduce an overhead bit of the first data frame, and reduce system design complexity.

FIG. 14 is a schematic diagram of a logical structure of a system for sending and receiving a code block data stream according to an embodiment of the present invention. As shown in FIG. 14, the system includes a sending device 1401 and a receiving device 1402.

The sending device 1401 is configured to: add m first data frames carrying the code block data stream to n physical layer data frames on an Ethernet physical interface, identify a location of the first code block of each first data frame in the m first data frames by using one alignment marker of one physical layer data frame in the n physical layer data frames, and send the n physical layer data frames that carry the m first data frames of the code block data stream.

The receiving device 1402 is configured to: obtain n physical layer data frames that are on an Ethernet physical interface and that carry m first data frames of the code block data stream, determine a location of the first code block of each first data frame in the m first data frames according to one alignment marker of one physical layer data frame in the n physical layer data frames, and perform data restoration on the code block data stream by using the first code of each first data frame in the m first data frames as a start code block, where m and n are integers greater than or equal to 1.

When a first data frame carrying a code block data stream is transmitted by using an Ethernet physical interface, a start location of the first data frame is identified by using an alignment marker of a physical layer data frame on the Ethernet physical interface, so that a receive end can determine the start location of the first data frame according to the alignment marker. There is no need to perform framing search in the first data frame, so as to improve efficiency in performing framing in the first data frame by a system receiving side, reduce an overhead bit of the first data frame, and reduce system design complexity.

FIG. 15 is a schematic structural diagram of a computer device 1500 according to an embodiment of the present invention. As shown in FIG. 15, the computer device 1500 includes a processor 1501, a memory 1502, an input/output interface 1503, a communications interface 1504, and a bus 1505. The processor 1501, the memory 1502, the input/output interface 1503, and the communications interface 1504 implement mutual communication and connection by using the bus 1505.

The processor 1501 may be a general-purpose central processing unit (Central Processing Unit, CPU), a microprocessor, an application-specific integrated circuit (Application Specific Integrated Circuit, ASIC), or at least one integrated circuit, configured to execute a related program, so as to implement technical solutions provided in the embodiments of the present invention.

The memory 1502 may be a read-only memory (Read Only Memory, ROM), a static storage device, a dynamic storage device, or a random access memory (Random Access Memory, RAM). The memory 1502 may store an operating system and another application program. When the technical solutions provided in the embodiments of the present invention are implemented by software or firmware, program code used to implement the technical solutions provided in the embodiments of the present invention is stored in the memory 1502, and is executed by the processor 1501.

The input/output interface 1503 is configured to receive data and information that are input, and output data such as an operation result.

The communications interface 1504 uses a transceiver apparatus, for example, but not limited to a transceiver, so as to implement communication between the computer device 1500 and another device or communications network.

The bus 1505 may include a channel, to transfer information between parts (such as the processor 1501, the memory 1502, the input/output interface 1503, and the communications interface 1504) of the computer device 1500.

In a specific implementation process, a sending device uses the processor 1501 to execute code stored in the memory 1502, so as to add m first data frames carrying the code block data stream to n physical layer data frames on an Ethernet physical interface, and identify a location of the first code block of each first data frame in the m first data frames by using one alignment marker of one physical layer data frame in the n physical layer data frames; and the sending device sends, by using the communications interface 1504, the n physical layer data frames that carry the m first data frames of the code block data stream, where m and n are integers greater than or equal to 1.

In a specific implementation process, a receiving device obtains, by using the communications interface 1504, n physical layer data frames that are on an Ethernet physical interface and that carry m first data frames of the code block data stream; and the receiving device uses the processor 1501 to execute code stored in the memory 1502, so as to determine a location of the first code block of each first data frame in the m first data frames according to one alignment marker of one physical layer data frame in the n physical layer data frames; and the receiving device performs data restoration on the code block data stream by using the first code of each first data frame in the m first data frames as a start code block, where m and n are integers greater than or equal to 1.

It should be noted that, although for the computer device 1500, merely the processor 1501, the memory 1502, the input/output interface 1503, the communications interface 1504, and the bus 1505 are shown in FIG. 15, in a specific implementation process, a person skilled in the art should understand that the computer device 1500 further includes another device required for implementing normal operation. In addition, a person skilled in the art should understand that, according to a specific requirement, the computer device 1500 may further include a hardware device that implements another additional function. In addition, a person skilled in the art should understand that the computer device 1500 may also include merely a device required for implementing the embodiments of the present invention, and does not need to include all devices shown in FIG. 15.

When a first data frame carrying a code block data stream is transmitted by using an Ethernet physical interface, a start location of the first data frame is identified by using an alignment marker of a physical layer data frame on the Ethernet physical interface, so that a receive end can determine the start location of the first data frame according to the alignment marker. There is no need to perform framing search in the first data frame, so as to improve efficiency in performing framing in the first data frame by a system receiving side, reduce an overhead bit of the first data frame, and reduce system design complexity.

A person of ordinary skill in the art may understand that, each aspect of the present invention or a possible implementation of each aspect may be specifically implemented as a system, a method, or a computer program product. Therefore, each aspect of the present invention or a possible implementation of each aspect may use forms of hardware only embodiments, software only embodiments (including firmware, resident software, and the like), or embodiments with a combination of software and hardware, which are uniformly referred to as "circuit", "module", or "system" herein. In addition, each aspect of the present invention or the possible implementation of each aspect may take a form of a computer program product, where the computer program product refers to computer-readable program code stored in a computer-readable medium.

The computer-readable medium may be a computer-readable signal medium or a computer-readable storage medium. The computer-readable storage medium includes but is not limited to an electronic, magnetic, optical, electromagnetic, infrared, or semi-conductive system, device, or apparatus, or any appropriate combination thereof, such as a random access memory (RAM), a read-only memory (ROM), an erasable programmable read only memory (EPROM or flash memory), an optical fiber, and a compact disc read only memory (CD-ROM).

A processor in a computer reads computer-readable program code stored in a computer-readable medium, so that the processor can perform a function and an action specified in each step or a combination of steps in a flowchart; an apparatus is generated to implement a function and an action specified in each block or a combination of blocks in a block diagram.

All computer-readable program code may be executed on a user computer, or some may be executed on a user computer as a standalone software package, or some may be executed on a computer of a user while some is executed on a remote computer, or all the code may be executed on a remote computer or a server. It should also be noted that, in some alternative implementation solutions, each step in the flowcharts or functions specified in each block in the block diagrams may not occur in the illustrated order. For example, two consecutive steps or two blocks in the illustration, which are dependent on an involved function, may be executed substantially at the same time in practice, or these blocks may sometimes be executed in reverse order.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

The foregoing are merely example embodiments of the present invention. A person skilled in the art may make various modifications and variations to the present invention without departing from the spirit and scope of the present invention.

## Claims

1. A method for sending a code block data stream, wherein the method comprises:
adding m first data frames carrying the code block data stream to n physical layer data frames on an Ethernet physical interface;
identifying a location of the first code block of each first data frame in the m first data frames by using one alignment marker of one physical layer data frame in the n physical layer data frames; and
sending the n physical layer data frames that carry the m first data frames of the code block data stream, wherein
m and n are integers greater than or equal to 1.

2. The method according to claim 1, wherein the location of the first code block of each first data frame in the m first data frames one-to-one corresponds to one alignment marker of one physical layer data frame in the n physical layer data frames.

3. The method according to claim 1, wherein locations of the first code blocks of at least two first data frames in the m first data frames correspond to one alignment marker of one physical layer data frame in the n physical layer data frames.

4. The method according to any one of claims 1 to 3, wherein the code block in the code block data stream is a 64B/66B code block.

5. A method for receiving a code block data stream, wherein the method comprises:
obtaining n physical layer data frames that are on an Ethernet physical interface and that carry m first data frames of the code block data stream;
determining a location of the first code block of each first data frame in the m first data frames according to one alignment marker of one physical layer data frame in the n physical layer data frames; and
performing data restoration on the code block data stream by using the first code of each first data frame in the m first data frames as a start code block, wherein
m and n are integers greater than or equal to 1.

6. The method according to claim 5, wherein the location of the first code block of each first data frame in the m first data frames one-to-one corresponds to one alignment marker of one physical layer data frame in the n physical layer data frames.

7. The method according to claim 5, wherein locations of the first code blocks of at least two first data frames in the m first data frames correspond to one alignment marker of one physical layer data frame in the n physical layer data frames.

8. The claim according to any one of claims 5 to 7, wherein the code block in the code block data stream is a 64B/66B code block.

9. A sending device for a code block data stream, wherein the sending device comprises:
a data frame carrying module, configured to add m first data frames carrying the code block data stream to n physical layer data frames on an Ethernet physical interface;
a location identification module, configured to identify a location of the first code block of each first data frame in the m first data frames by using one alignment marker of one physical layer data frame in the n physical layer data frames; and
a sending module, configured to send the n physical layer data frames that carry the m first data frames of the code block data stream, wherein
m and n are integers greater than or equal to 1.

10. The sending device according to claim 9, wherein the location of the first code block of each first data frame in the m first data frames one-to-one corresponds to one alignment marker of one physical layer data frame in the n physical layer data frames.

11. The sending device according to claim 9, wherein locations of the first code blocks of at least two first data frames in the m first data frames correspond to one alignment marker of one physical layer data frame in the n physical layer data frames.

12. The sending device according to any one of claims 9 to 11, wherein the code block in the code block data stream is a 64B/66B code block.

13. A receiving device for a code block data stream, wherein the receiving device comprises:
a data frame obtaining module, configured to obtain n physical layer data frames that are on an Ethernet physical interface and that carry m first data frames of the code block data stream;
a location determining module, configured to determine a location of the first code block of each first data frame in the m first data frames according to one alignment marker of one physical layer data frame in the n physical layer data frames;
and
a data stream restoration module, configured to perform data restoration on the code block data stream by using the first code of each first data frame in the m first data frames as a start code block, wherein
m and n are integers greater than or equal to 1.

14. The receiving device according to claim 13, wherein the location of the first code block of each first data frame in the m first data frames one-to-one corresponds to one alignment marker of one physical layer data frame in the n physical layer data frames.

15. The receiving device according to claim 13, wherein locations of the first code blocks of at least two first data frames in the m first data frames correspond to one alignment marker of one physical layer data frame in the n physical layer data frames.

16. The receiving device according to any one of claims 13 to 15, wherein the code block in the code block data stream is a 64B/66B code block.

17. A system for sending and receiving a code block data stream, wherein the system comprises a sending device and a receiving device, wherein
the sending device is configured to: add m first data frames carrying the code block data stream to n physical layer data frames on an Ethernet physical interface, identify a location of the first code block of each first data frame in the m first data frames by using one alignment marker of one physical layer data frame in the n physical layer data frames, and send the n physical layer data frames that carry the m first data frames of the code block data stream; and
the receiving device is configured to: obtain n physical layer data frames that are on an Ethernet physical interface and that carry m first data frames of the code block data stream, determine a location of the first code block of each first data frame in the m first data frames according to one alignment marker of one physical layer data frame in the n physical layer data frames, and perform data restoration on the code block data stream by using the first code of each first data frame in the m first data frames as a start code block; wherein
m and n are integers greater than or equal to 1.

18. The system according to claim 17, wherein the location of the first code block of each first data frame in the m first data frames one-to-one corresponds to one alignment marker of one physical layer data frame in the n physical layer data frames.

19. The system according to claim 17, wherein locations of the first code blocks of at least two first data frames in the m first data frames correspond to one alignment marker of one physical layer data frame in the n physical layer data frames.

20. The system according to any one of claims 17 to 19, wherein the code block in the code block data stream is a 64B/66B code block.
